# FASCICULE DE BREVET EUROPEEN

(11) **EP 1 944 595 B1**
(45) Date de publication et mention de la délivrance du brevet: **27.11.2013**
(21) Numéro de dépôt: 07122475.2
(22) Date de dépôt: 06.12.2007
(51) Int. Cl.: G01L 1/16

(54) **Microsystème pour la mesure de pression d'un gaz**
Mikrosystem für die Druckmessung eines Gases
Microsystem for measuring gas pressure

(30) Priorité: 29.12.2006 FR 0656047
(43) Date de publication de la demande: 16.07.2008
(73) Titulaire: Pfeiffer Vacuum GmbH, 35614 Aßlar (DE); CNRS, 75794 Paris Cedex 16 (FR); Université Henri Poincaré (Nancy I), 54003 Nancy Cedex (FR)
(72) Inventeur: Nicolay, Pascal, 54000, NANCY (FR); Kambara, Hisanori, 74350, VILLY-LE-PELLOUX (FR); Elmazria, Omar, 54280, SEICHAMPS (FR)
(74) Mandataire: Sogan, Gloria

(56) Documents cités:
- EP-A2- 1 533 601
- US-A- 5 212 988

## Description

La présente invention se rapporte à un système d'encombrement réduit destiné à mesurer une pression dans une atmosphère gazeuse avec une grande sensibilité et comprenant un capteur de pression du type « à ondes élastiques » comprenant les capteurs dits « à ondes acoustiques de surface » ou capteurs SAW (pour « Surface Acoustic Waves » en anglais) et les capteurs dits « à ondes acoustiques de volume » ou capteurs BAW (pour « Bulk Acoustic Waves » en anglais) . Elle s'étend en outre au procédé d'utilisation de ce système.

L'invention se rapporte plus particulièrement aux micro-capteurs pour la mesure de pression permettant d'obtenir des systèmes de mesure de très petite taille (de quelques mm² à quelques cm²) et de grande précision (supérieure à 10⁻³ mbar), notamment à très basse pression (inférieure à 1 mbar).

Dans tous les cas les capteurs de pression fonctionnent selon le principe suivant : une pression est exercée sur un corps d'épreuve qui est l'élément mécanique ayant pour fonction de transformer les variations de la grandeur à mesurer auquel il est soumis en une grandeur physique mesurable (déplacement, déformation, force,...). Parmi ceux-ci on distingue notamment les capteurs basés sur le principe de la déformation d'un solide dans lesquels une membrane, se déforme de manière élastique sous l'action de la pression. Il existe aussi des capteurs comportant un élément sensible à la pression dont on mesure la variation de propriété physique autre que la déformation, telle que la température ou la conductance électronique.

Les dispositifs du type « à ondes élastiques » (SAW ou BAW) exploitent les propriétés électro-acoustiques de substrats piézoélectriques tels que le quartz, le niobate de lithium (LiNbO₃) ou l'oxyde de zinc pour générer des ondes de surface ou de volume. La vibration mécanique générée se propage à des fréquences dépendant de la direction cristallographique, des dimensions de la lame cristalline et du facteur de conversion électromécanique du matériau. La génération des ondes se fait à l'aide d'électrodes, appelées transducteurs, portés à des tensions opposées alternatives. Lorsqu'une tension alternative est appliquée sur les électrodes, il s'ensuit une alternance de compressions et d'expansions horizontales et verticales du matériau sous-jacent ou sur-jacent, qui peut générer des ondes progressives de surface ou de volume. Les ondes de surface peuvent être de type Raleigh dont l'effet n'est sensible qu'au voisinage immédiat de la surface.

Toutefois la détection manque de sensibilité pour les pressions basses. On utilise alors des capteurs basés sur un dispositif SAW qui peuvent notamment être utilisés pour mesurer des pressions avec une grande sensibilité et une bonne résolution. Les dispositifs SAW sont construits autour de un ou deux transducteurs interdigités déposés à la surface d'un substrat piézoélectrique. Dans la configuration à deux transducteurs, une onde élastique est générée entre les deux transducteurs (émetteur/récepteur), et se propage à la surface du substrat piézoélectrique qui peut être associé à une membrane ou jouer le rôle d'une membrane. Cette onde est captée par le transducteur servant de récepteur. Lorsque le dispositif ne subit aucune perturbation, sa fréquence centrale de fonctionnement fc est fixée par la formule fc = v / λ où v est la vitesse de propagation de l'onde élastique de surface, et λ sa longueur d'onde imposée par l'espacement entre les doigts des transducteurs.

Les capteurs basés sur un dispositif BAW sont constitués d'une lame piézoélectrique prise en sandwich entre deux électrodes métalliques. La fréquence de vibration fondamentale fc du dispositif BAW est donnée par la relation fc = v/λ où v est la vitesse de propagation de l'onde élastique de surface, et λ sa longueur d'onde égale à deux fois l'épaisseur de la lame. L'augmentation de la fréquence de résonnance est obtenue en diminuant en remplaçant la lame piézoélectrique par un film de moindre épaisseur.

Cependant, comme pour l'ensemble des capteurs de pression de l'art antérieur, les capteurs de pression à ondes élastiques de surface décrits ci-dessus manquent de sensibilité dans le domaine des basses et très basses pressions. Par exemple dans le cas d'une membrane circulaire, leur sensibilité est notamment proportionnelle au rapport (R / h)² où R est le rayon de la membrane et h son épaisseur. Compte-tenu des limitations dues aux propriétés mécaniques des matériaux, il n'est pas possible de diminuer l'épaisseur de la membrane h au-delà d'une certaine limite. La décroissance du rayon R seule entraîne donc une diminution rapide de la sensibilité, ce qui explique la très faible sensibilité des micro-membranes. Compte tenu de cette très faible sensibilité, il est impossible de discerner des faibles variations de pression à l'aide de ces microsystèmes. Ils sont donc inutilisables dans le domaine des basses et très basses pressions.

En outre le problème de la sensibilité de la mesure à la nature du gaz se pose pour toutes les jauges de pression thermiques, car la conductivité thermique d'un gaz est fonction à la fois de la pression et de sa nature chimique. Ce problème ne connaît aucune solution autre que la calibration préalable de la jauge, en fonction des espèces gazeuses présentes. Lorsqu'il est impossible de connaître la composition du gaz à mesurer, l'incertitude de mesure croît rapidement.

La présente invention a pour but d'éliminer les inconvénients de l'art antérieur comme c'est indiqué par exemple dans le document US 5 212 988, et en particulier de proposer un microsystème permettant de mesurer, avec une précision nettement supérieure à 10⁻³ mbar, des basses pressions dans la gamme de 10⁻³ mbar à 1 mbar. Ces performances sont très supérieures dans cette gamme de pressions (inférieure à 1 mbar) à celles permises par les systèmes actuels.

L'invention a aussi pour but de proposer un système capable de réduire le temps de réponse à quelques dizaines de secondes, voire à moins de 100 millisecondes.

L'invention a encore pour but de proposer un système capable de s'auto-calibrer en fonction de la nature du gaz en présence.

L'objet de la présente invention est un microsystème de mesure de la pression d'un gaz comportant :
- un dispositif à ondes élastiques,
- un générateur d'onde radiofréquence générant une onde de fréquence supérieure à 200 MHz,
- un moyen de modification de la température du dispositif,
- un moyen de comparaison de la fréquence de fonctionnement du dispositif avec une fréquence de référence.

Avantageusement le générateur de signal radiofréquence génère une onde de fréquence supérieure à 200 MHz, et de préférence pouvant atteindre 2,5 GHz afin d'augmenter la sensibilité du dispositif.

Lorsque le dispositif à ondes élastiques, notamment de type SAW ou BAW, ne subit aucune perturbation, sa fréquence centrale de fonctionnement fc est utilisée comme fréquence de référence fo. Une variation de la valeur d'un paramètre relatif au gaz, tel que la pression du gaz sur le substrat piézoélectrique, modifie la propagation de l'onde élastique. Cette modification engendre une variation de la fréquence centrale de fonctionnement fc du dispositif à ondes élastiques. Une analyse comparative est réalisée entre cette fréquence centrale de fonctionnement fc et la fréquence de référence fo. La différence Δf = fc - fo permet alors de déterminer la valeur du paramètre relatif au gaz à mesurer.

Le système selon l'invention atteint sa précision maximum dans l'intervalle de pression allant de 10⁻³ mbar à 10⁻¹ mbar, mais bien entendu, il est capable de fonctionner dans un domaine de pression beaucoup plus étendu, allant de 10⁻⁵ mbar à plusieurs bars.

Selon l'invention, le système comporte des moyens de modification de la température du dispositif placé dans le gaz dont on veut mesurer la pression. Ce sont notamment des moyens de chauffage du substrat piézoélectrique supportant le dispositif, comme une résistance chauffante. Ces moyens de chauffage peuvent être placés aussi bien au-dessus qu'en dessous du dispositif. En raison des échanges de chaleur se produisant au niveau du substrat, la température du substrat piézoélectrique s'équilibre en fonction de la pression du gaz environnant. L'évacuation de la chaleur reçue par le substrat s'effectue principalement par les phénomènes conjugués de :
- rayonnement thermique, celui-ci dépendant uniquement de la température du substrat et étant indépendant de la pression du gaz,
- conduction thermique (diffusion de la chaleur du substrat dans le gaz) qui est liée directement à la différence de température entre le gaz et le substrat, et à la conductivité thermique du gaz (c'est-à-dire à sa pression car la quantité de chaleur perdue par diffusion est directement liée au nombre de molécules pouvant transporter de l'énergie du substrat chaud vers des zones plus froides), et
- convection thermique, celle-ci étant reliée à la différence de température entre le gaz et le substrat, et à la pression du gaz,

Toute modification de la pression du gaz induit un changement de la chaleur évacuée et modifie en conséquence la température d'équilibre du dispositif. Or, la vitesse de propagation des ondes élastiques est très sensible à la température. La fréquence centrale fc des dispositifs SAW ou BAW l'est donc tout autant. Une mesure fine de la variation de la fréquence de fonctionnement fc du dispositif SAW ou BAW donne ainsi une mesure très précise de la température et permet donc de mesurer tout aussi précisément la pression du gaz.

Selon une première variante de réalisation, le dispositif à ondes élastiques est suspendu de manière à minimiser les déperditions de chaleur et améliorer la précision de la mesure. Avantageusement le substrat est suspendu par des fils de manière à minimiser les déperditions de chaleur vis à vis du support..

Selon une autre variante, le dispositif à ondes élastiques est usiné dans une matrice à laquelle il reste relié par un pont de matière de meilleure résistance mécanique.

Selon un mode de réalisation de l'invention, le dispositif à ondes élastiques est un dispositif à ondes élastiques de volume comprenant un émetteur d'onde élastique, un récepteur de l'onde élastique émise, une lame piézoélectrique et un substrat dans le volume duquel se propage l'onde.

Selon un autre mode de réalisation de l'invention, le dispositif à ondes élastiques est un dispositif à ondes élastiques de surface comprenant un émetteur d'onde élastique, un récepteur de l'onde élastique émise, et un substrat piézoélectrique à la surface duquel se propage l'onde. Le substrat peut être constitué d'un matériau piézoélectrique ou simplement recouvert d'une couche d'un matériau piézoélectrique.

Selon une forme particulière d'exécution de l'invention, le dispositif à ondes élastiques est un dispositif à ondes élastiques de surface comprenant un substrat piézoélectrique portant l'émetteur et le récepteur d'onde élastique, dont la majorité de la surface est recouverte d'une couche de métal à faible coefficient d'émissivité.

On utilise de préférence un dispositif à ondes élastiques comportant un matériau piézoélectrique présentant un coefficient de température TCF (pour « Temperature Coefficient of Frequency » en anglais) le plus élevé possible. On choisit avantageusement un TCF d'au moins 70ppm/°C. Certaines coupes de matériau piézoélectrique tels que LiNbO₃ ou LiTaO₃ présentent des TCF de cet ordre, voire plus élevés encore et pouvant dépasser 90ppm/°C.

Avantageusement, le dispositif fonctionne à une température optimale définie, permettant un échange maximal de chaleur par diffusion thermique entre le substrat et le gaz, ainsi qu'une variation maximale de température pour une variation donnée de conductivité du gaz (c'est-à-dire de pression). Il existe une température optimale de fonctionnement du capteur pour chaque température du gaz. Cette température optimale se situe typiquement autour de 200 °C pour un gaz à température ambiante, mais dépend étroitement des paramètres du dispositif et du gaz.

Avantageusement on utilise plusieurs dispositifs disposés parallèlement, chacun couvrant une gamme de pression différente et complémentaire. Ainsi on augmente le domaine d'utilisation du système.

Selon un premier mode de réalisation, le microsystème comporte en outre au moins deux dispositifs à ondes élastiques orientés dans des directions différentes, pour la mesure de la pression hydrostatique et de la température du gaz.

Selon un deuxième mode de réalisation, le microsystème comporte en outre au moins un dispositif à ondes élastiques de surface recouvert d'une couche de polymère, pour identifier la nature du ou des gaz.

Selon encore un autre mode de réalisation, le microsystème comporte en outre des moyens, de préférence des moyens électroniques, d'interrogation et de pilotage des dispositifs à ondes élastiques et un programme de contrôle du chauffage et de traitement des signaux émis par les dispositifs. Le traitement des signaux peut permettre la détection, l'identification et la mesure des gaz.

Le microsystème comporte avantageusement des moyens, de préférence des moyens électroniques, de contrôle de l'alimentation de la résistance chauffante.

Le microsystème peut fonctionner en mode pulsé ou en mode continu asservi pour accélérer la mise à l'équilibre ou maintenir constante la température.

L'invention a comme avantage supplémentaire que plus on réduit la taille du système plus on augmente sa sensibilité, tout en diminuant son temps de réponse et sa consommation d'énergie.

De plus, le dispositif selon l'invention présente l'avantage de pouvoir être couplé avec une autre méthode de mesure de pression, utilisable dans la gamme de pression supérieure à 0,1 mbar, comme par exemple des jauges résistives, des thermocouples ou d'autres dispositifs SAW ou BAW. Cette combinaison de dispositifs permet d'obtenir un capteur capable de mesurer des pressions avec une grande précision dans une large gamme de pression allant de 10⁻⁶ mbar à plusieurs bars.

L'invention repose sur le fait que la vitesse de propagation d'une onde élastique de surface ou de volume est modifiée par toute perturbation de son environnement. Elle propose donc aussi un procédé de mesure de la pression d'un gaz au moyen de ce système, comprenant les étapes suivantes:
- on place un dispositif à ondes élastiques dans un gaz dont on veut connaître la pression,
- on porte le dispositif à une température différente de la température du gaz,
- on détermine la température d'équilibre thermique du dispositif à partir de la mesure de sa fréquence de fonctionnement fc,
- on mesure la température du gaz,
- on calcule la pression du gaz à partir de la température d'équilibre du dispositif et de la température du gaz.

Selon une forme d'exécution, la température du gaz est mesurée avec un dispositif à ondes élastiques. La température de ce dispositif n'est, bien entendu, pas modifiée.

L'invention a comme avantage de permettre d'atteindre des précisions extrêmes. En utilisant des coupes de matériau présentant un TCF de l'ordre de 90 ppm / °C (comme par exemple certaines coupes du LiNbO₃) et en utilisant à une fréquence de fonctionnement de 1GHz, il est possible d'atteindre des précisions (et donc des pressions limites) de l'ordre de 10⁻⁶ mbar.

Ces résultats peuvent être encore améliorés en :
- augmentant la fréquence de fonctionnement du dispositif,
- diminuant la taille du dispositif,
- choisissant un dispositif comprenant un substrat avec un TCF encore plus élevé.

D'autres caractéristiques et avantages de la présente invention apparaîtront au cours de la description suivante d'un mode de réalisation, donnée bien entendu à titre illustratif et non limitatif, et dans le dessin annexé sur lequel
- la figure 1 représente une vue en perspective schématique d'un système de mesure de pression selon un premier mode de réalisation de l'invention comprenant un dispositif à ondes élastiques de surface,
- les figures 2A et 2B montrent des vues de dessus et de dessous respectivement d'un deuxième mode de réalisation d'un dispositif à ondes élastiques de surface,
- la figure 3 est une vue en coupe schématique des échanges de chaleur dans le dispositif des figures 2A et 2B,
- la figure 4 montre en coupe un mode de réalisation d'un système de mesure de pression comprenant un dispositif à ondes élastiques de surface selon un troisième mode de réalisation,
- la figure 5 montre un système de mesure de pression pouvant être interrogé à distance selon un quatrième mode de réalisation,
- la figure 6 représente une vue en perspective schématique d'un système de mesure selon un cinquième mode de réalisation,
- la figure 7 montre un système de mesure de pression incluant le système de la figure 6,
- la figure 8 montre en coupe un mode de réalisation d'un dispositif à ondes élastiques de volume,
- la figure 9 montre en coupe un autre mode réalisation d'un dispositif à ondes élastiques de volume,
- la figure 10 montre en coupe un dispositif à ondes élastiques de volume associé à un miroir de Bragg selon encore un autre mode de réalisation.

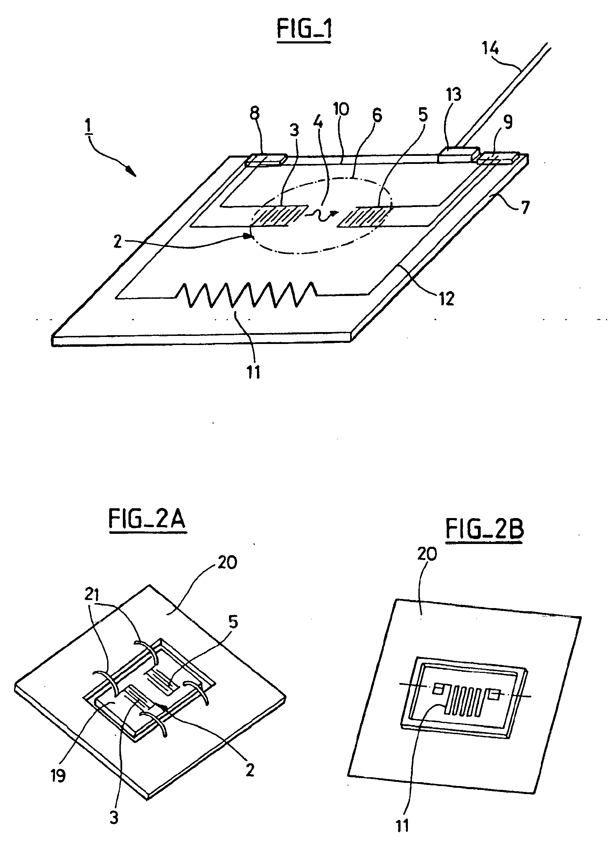

Dans le mode de réalisation du système de mesure de pression **1** de l'invention, illustré sur la figure 1, le dispositif à ondes élastiques de surface **2** comporte un émetteur **3** (ou transducteur d'entrée) d'une onde élastique **4** qui se propage en direction d'un récepteur **5** (ou transducteur de sortie) à la surface **6** d'un substrat **7** piézoélectrique. L'émetteur **3** est relié à un générateur radiofréquence 8 et le récepteur **5** est relié à un comparateur **9.** L'émetteur **3** et le récepteur **5** communiquent par une ligne de liaison **10.** Une résistance **11,** par exemple sérigraphiée en aluminium ou en platine, permet de chauffer par effet Joule le substrat **7** du dispositif **2.** La résistance **11,** ici représentée placée sur le substrat **7** du même côté que l'émetteur **3** et le récepteur **5,** est reliée par une ligne d'alimentation **12** à un port **13** d'entrée/sortie du système permettant la communication vers l'extérieur par une antenne ou un câble **14.** La température du gaz peut être mesurée par différents moyens, comme par exemple un thermocouple, un capteur SAW, une thermistance, etc... La ligne de liaison **10** est également reliée au port **13** d'entrée/sortie.

Il faut toutefois préciser que le système chauffant **11** et les transducteurs **3, 5** interdigités peuvent être disposés soit sur la même face du substrat **7,** soit sur deux faces opposées. La première disposition présente l'avantage de faciliter la fabrication du dispositif; la seconde disposition a l'avantage de permettre une réduction plus importante de l'encombrement du dispositif.

La figure 2A montre une vue de dessus et la figure 2B montre une vue de dessous d'un deuxième mode de réalisation du système de mesure. Le substrat **19** est suspendu à un support **20,** par exemple par des fils **21** d'or, de cuivre ou de platine assurant l'alimentation, de manière à minimiser les déperditions de chaleur via le support mécanique **20.** Le substrat **19** peut être choisi en un matériau possédant un coefficient de température TCF élevé, comme par exemple du LiNbO₃. Les transducteurs **3, 5** sont disposés sur l'une des faces du substrat **19,** alors que la résistance chauffante **11** est placée sur la face opposée.

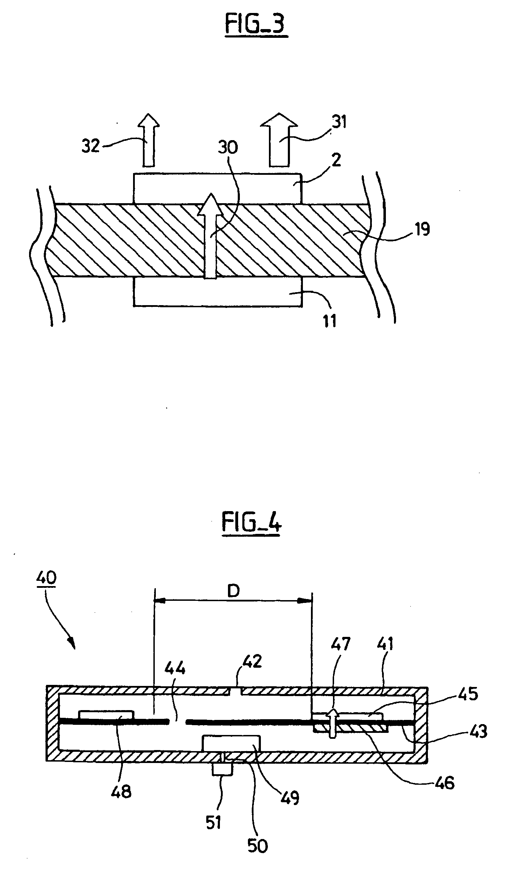

La figure 3 montre la direction **30** du flux de chaleur Qh provenant de la résistance **11** en direction du substrat **19.** Une partie de la chaleur reçue par le substrat **19** est dissipée par radiation **31** ou diffusion **32** (conduction + convection) de manière à permettre au substrat **19** d'atteindre sa température d'équilibre. La chaleur Qr perdue par radiation **31** ne dépend pas de la pression du gaz. Au contraire la chaleur Qd perdue par diffusion **32** est proportionnelle au nombre de molécules de gaz présentes au voisinage du substrat **19.** L'équilibre thermique est atteint quand Qh = Qr + Qd. On comprend que cet équilibre est directement relié à la pression du gaz, et qu'une variation de la pression du gaz entraînera une variation de la température d'équilibre du dispositif **2,** et donc de la fréquence de l'onde élastique. Le temps de réponse du système de mesure est très inférieur à la minute. Pour mesurer la température du gaz, on peut utiliser un dispositif à ondes élastiques de surface analogue mais non chauffé. La fréquence de l'onde élastique est supérieure à 200MHz et peut aller jusqu'à 250 MHz dans le présent exemple, mais on pourra utiliser avantageusement une fréquence pouvant atteindre une valeur de l'ordre de 2,5 GHz.

Pour chaque température du gaz, il existe une température optimale de fonctionnement du dispositif **2** qui maximise la sensibilité de la mesure. On peut estimer à environ 173 °C la température optimale de fonctionnement du dispositif **2** représenté sur la figure 1 pour un gaz à 25 °C. La précision atteinte est supérieure à 10⁻³ mbar dans la gamme de 10⁻³ mbar à 30.10⁻³ mbar.

Bien entendu, dans le cas d'un gaz chaud, on pourrait de la même manière utiliser un dispositif refroidi dans lequel le gaz refroidirait d'autant le dispositif que la pression serait élevée.

On considérera maintenant la figure 4 qui illustre en coupe un troisième mode de réalisation d'un système de mesure **40** qui est placé dans un boîtier **41** protecteur. Le boîtier **41** comporte un orifice d'accès **42** pour les gaz et sert de support au substrat **43** dans lequel des perforations **44** permette une bonne répartition du gaz. Les transducteurs **45** sont disposés sur le substrat **43** et une résistance chauffante **46** est placée sous la zone du substrat **43** correspondante pour générer un flux de chaleur **47.** D'autres transducteurs **48,** dont la température n'est pas modifiée, sont également disposés sur une autre zone du substrat **43,** pour la mesure de la température du gaz présent à l'intérieur du boîtier **41,** et le calibrage de la mesure des trabnsducteurs **45.** Une distance **D** suffisante sépare les transducteurs **45** chauffés des transducteurs **48** non chauffés afin d'éviter tout échange de chaleur entre eux. Un moyen **49** de calibrage et de contrôle des conditions de mesure est relié par un fil de liaison **51** à un connecteur extérieur **50** pour la communication de la mesure et l'alimentation du système.

Les dispositifs SAW sont très sensibles au dépôt d'espèces sur leur surface et peuvent être utilisés comme capteur de vapeurs : lorsque la température ambiante dans une enceinte close diminue, des composés se condensent à mesure que la température passe au-dessous de leur point de liquéfaction. La mesure de la masse condensée et de la température de condensation permet d'identifier la nature du composé. La masse condensée permet de déduire la pression partielle du composé avant condensation, c'est-à-dire sa pression de vapeur saturante Pv pour la température de condensation Tc. La connaissance de Pv = f(Tc) permet d'identifier le composé. La vapeur d'eau peut, par exemple, être détectée et sa concentration déduite. La possibilité de chauffer l'un des dispositifs SAW permet aussi de procéder en sens inverse et de discriminer certains des constituants du gaz environnant en réalisant une analyse thermique différentielle dans laquelle les composés s'évaporent les uns après les autres lorsque le dispositif est chauffé. La connaissance de la pression dans l'enceinte et de la température au moment de l'évaporation permet d'identifier les composés.

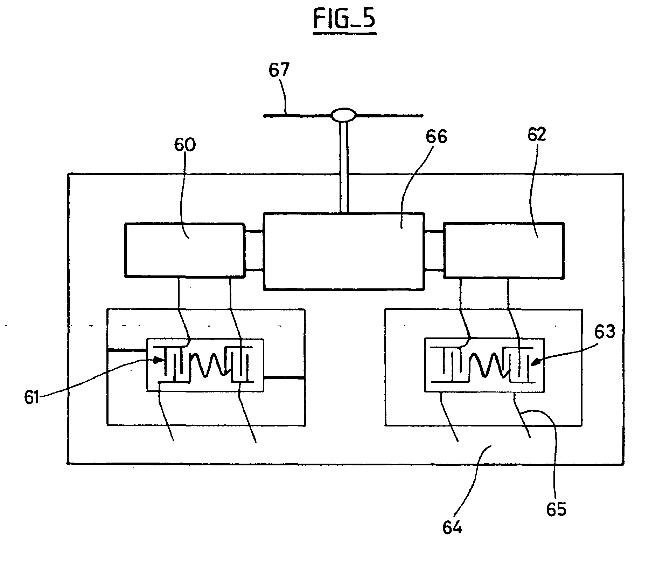

Le système de mesure de pression peut être équipé pour être interrogé à distance selon un quatrième mode de réalisation montré schématiquement sur la figure 5. Le système comporte un premier oscillateur **60** relié à un premier dispositif 61 à ondes élastiques de surface qui est chauffé et dont la température d'équilibre, et donc la fréquence, varie avec la pression. Le système comporte aussi un deuxième oscillateur **62** relié à un deuxième dispositif **63** sans chauffage qui mesure la température du gaz. Le dispositif **61** est placé dans un circuit électronique oscillant dont il peut gouverner la fréquence d'oscillation, celle-ci pouvant être lue à distance. Les deux dispositifs **61** et **63** sont suspendus à un support **64** par des fils **65** comme décrit précédemment. Les deux oscillateurs **60** et **62** sont connectés à un moyen de calcul et de traitement du signal **66,** lui-même relié à une antenne **67.**

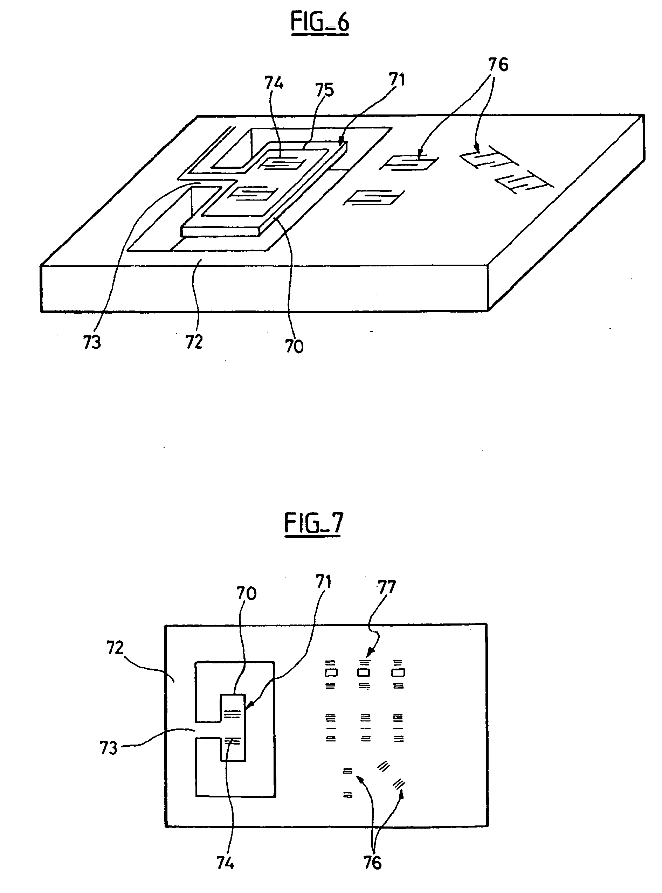

Un cinquième mode de réalisation d'un système de mesure de pression est illustré sur la figure 6. Le substrat **70** du dispositif **71** est usiné dans une matrice **72,** constituée d'un matériau piézoélectrique ou non-piézoélectrique, de manière à y rester rattaché par un pont de matière **73.** Dans ce dernier cas, le silicium peut être employé comme matériau de base. Des structures dites SOI (pour "Silicon On Insulator" en anglais) pourront avantageusement être utilisées pour réaliser des gravures nettes et précises. Une fois usiné, le substrat **70** de silicium est recouvert d'une couche mince piézoélectrique de dimension submillimétrique. Cette couche mince peut être par exemple de l'oxyde de zinc (ZnO), du nitrure d'aluminium (AIN), du niobate de lithium (LiNbO₃), ou du tantalate du litium (LiTaO₃). Cette couche pourra être réalisée par les techniques de dépôt de couches minces ou par un procédé dit de "wafer bonding". Les technologies utilisées pour l'usinage de la matrice et pour le dépôt des couches minces sont les technologies classiques de gravure et de dépôt de couches minces utilisées dans le domaine de la microélectronique et des MEMS (pour "MicroElectroMechanical Systems" en anglais).

Les transducteurs interdigités **74** et la résistance chauffante **75** sont fabriqués par photolithographie, et sont avantageusement déposés sur la même face du substrat **70.** L'écartement entre les doigts est minimal afin de fonctionner à la plus haute fréquence possible. L'écartement sera avantageusement de quelques dixièmes de micron afin de fonctionner dans la bande ISM à 2,45 GHz. La lithographie optique permet d'atteindre ce niveau de détails. La taille minimale du support **70** piézoélectrique suspendu est imposé par les dimensions minimales des transducteurs **74.** Les technologies actuelles de fabrication des dispositifs SAW permettent d'inscrire les transducteurs interdigités dans un carré de 100 X 100 µm. L'épaisseur de la couche piezoélectrique est la plus faible possible afin de maximiser son rapport surface/volume. L'épaisseur minimale dépend de l'onde que l'on souhaite générer et de la résistance mécanique nécessaire pour une application donnée ; elle est en général inférieure à 30 µm.

Plusieurs matériaux peuvent être choisis pour la fabrication des transducteurs **74.** L'aluminium convient bien pour des applications en environnement ordinaire. L'or et le platine pourront être utilisés pour fabriquer des dispositifs capables de fonctionner en milieu extrême (gaz à haute température, corrosif). La couche piézoélectrique du support **70** est avantageusement recouverte ensuite d'une mince couche de métal, afin de diminuer au maximum son coefficient d'émissivité ε. Cette couche peut être faite du même métal que celui employé pour la fabrication des transducteurs ou d'un autre métal choisi pour son faible coefficient d'émissivité ε. Au moins deux autres dispositifs SAW **76** sont disposés à côté du dispositif **71** sur une zone non-usinée de la matrice **72.** Ces autres dispositifs **76** ne sont pas équipés de système de chauffage. Ils sont orientés différemment de sorte à être différemment sensibles à la température et à la pression hydrostatique. Ces dispositifs **76** additionnels sont utilisés pour mesurer la température et la pression hydrostatique du gaz environnant jusqu'à des pressions de plusieurs bars à plusieurs dizaines de bars. La température pourrait également être mesurée par une autre méthode insensible à la pression hydrostatique : sonde Pt100, thermocouple. Les transducteurs **74,** la résistance chauffante **75,** les dispositifs **76** additionnels et la connectique peuvent être déposés en une seule et même étape de photolithographie.

Comme représenté sur la figure 7, d'autres types de dispositifs SAW **77** peuvent en outre être déposés à côté du dispositif **71.** Chaque dispositif **77** est recouvert d'une couche de polymère, chaque couche est différente et spécifiquement sensible à certains gaz. Cet ensemble de dispositifs **77** capteurs de gaz constitue un « nez » électronique capable de discriminer de nombreux gaz et de procéder à l'analyse chimique du milieu environnant.

L'électronique associée au système de mesure de pression comprenant le dispositif **71** peut fonctionner selon trois modes distincts. A chaque mode correspond une méthode de mesure particulière.

Dans le premier mode, la température est déduite de la température d'équilibre de l'élément sensible. Le chauffage est continu, à puissance constante. La puissance est réglable en fonction de la température du gaz environnant. L'alimentation électrique est idéalement asservie en fonction du sens et de la vitesse de variation de la température : la puissance injectée est d'autant plus grande que la température augmente vite, et elle est d'autant plus faible que la température diminue vite. L'asservissement permet de réduire le temps de mise à l'équilibre de l'élément sensible. Il permet donc de réduire le temps de réponse du capteur.

Dans le second mode, la mesure est effectuée avant d'atteindre la température d'équilibre, c'est-à-dire pendant le régime transitoire. Le fonctionnement en mode pulsé avec une mesure prise durant la phase de refroidissement est le plus avantageux. Dans ce cas, une brève impulsion de courant permet de chauffer l'élément sensible au-delà de la température ambiante, avant de le laisser refroidir au contact du gaz environnant. L'élément se refroidit d'autant plus vite que la pression est élevée. La mesure peut être prise une fraction de seconde après la coupure de l'alimentation. En plus de permettre une réduction du temps de réponse, le mode de fonctionnement pulsé est le plus économique des trois modes, car l'alimentation ne fonctionne pas en continu.

Dans le troisième et dernier mode, le chauffage est continu et il est asservi pour maintenir constante la température de l'échantillon. Si la fréquence (température) change, un circuit électronique augmente ou diminue en temps réel la puissance de chauffage pour revenir à la fréquence (température) de référence. Dans ce cas, la pression est déduite de la puissance de chauffage injectée dans l'élément sensible. Cette mesure est moins précise mais plus rapide que dans les deux premiers modes.

Les trois modes sont complémentaires et peuvent être utilisés dans diverses situations de mesure.

Le cinquième mode de réalisation illustré par les figures 6 et 7 présente plusieurs avantages par rapport au deuxième mode de réalisation représenté sur les figures 2A et 2B. Une très petite taille, un grand rapport surface/volume et un mode d'interrogation judicieusement choisi permettent de réduire de façon drastique le temps de réponse de l'élément sensible. Ce temps est inférieur à 100 millisecondes. Le dispositif 71 de la figure 6 est robuste par construction et plus simple à fabriquer (pas de suspension délicate d'éléments sensibles et nombre réduit d'étapes de fabrication). Le dépôt d'une couche métallique sur la surface de la lame piézoélectrique permet de multiplier par dix la sensibilité du capteur.

Le cinquième mode de réalisation de l'invention permet d'apporter des solutions au problème de la sensibilité de la mesure à la nature du gaz en présence.

Un dispositif SAW est sensible à la déformation, donc à la pression hydrostatique (i.e. l'écrasement sous pression), même lorsqu'il n'est pas chauffé. Sa sensibilité à la pression hydrostatique est moins forte que sa sensibilité à la température mais elle n'est pas négligeable. Cette propriété permet d'utiliser le système de mesure selon le cinquième mode de réalisation pour mesurer la pression d'un gaz de façon absolue et avec un temps de réponse extrêmement court. Puisque cette mesure est absolue, elle peut servir à calibrer le système de mesure en mode thermique. Le système est donc capable de s'auto-calibrer en fonction de la nature du gaz. La procédure d'auto-calibration donne également directement accès à la conductivité thermique du gaz, ce qui est intéressant dans le cadre d'une analyse chimique de l'environnement du système.

Une autre solution consiste à analyser le gaz in situ afin de calibrer le système de mesure. Un dispositif SAW peut être transformé en capteur de gaz si l'on dépose sur sa surface une couche polymère capable d'absorber préférentiellement certains gaz. En utilisant un ensemble de dispositifs SAW recouverts chacun d'une couche polymère sensible à certains gaz comme représenté sur la figure 7, on obtient un système de mesure performant et bien adapté aux besoins de l'utilisateur. Ce système peut être utilisé dans notre cas pour une analyse du gaz environnant et une calibration du dispositif chauffé.

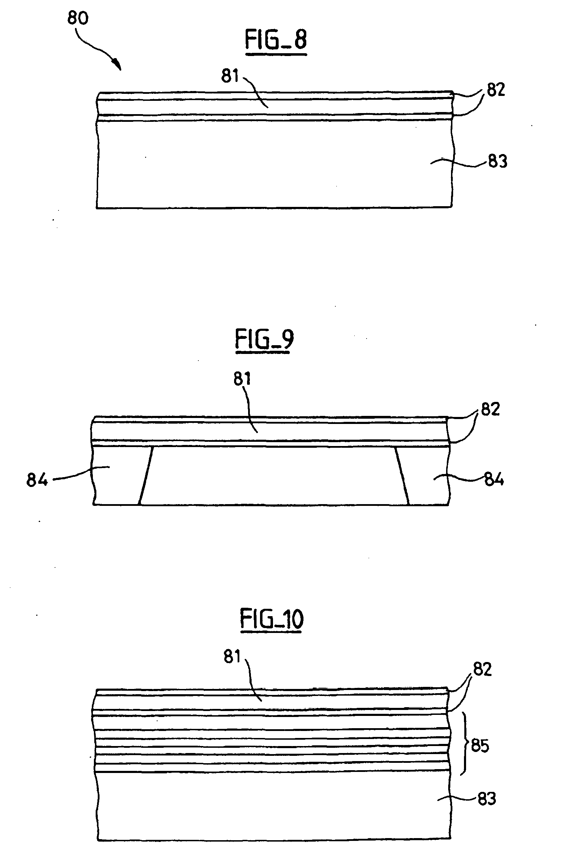

On a représenté sur la figure 8 un mode de réalisation d'un dispositif BAW **80** à ondes élastiques de volume. Le dispositif BAW comprend une lame piézoélectrique **81** entourée de deux électrodes **82** respectivement placées sur les faces opposées de la lame **81.** Le dispositif est de type dit à "mode harmonique élevé" encore appelé HBAR (pour "Higher mode Bulk Acoustic Resonator" en anglais) car il est posé sur un substrat **83.** Le substrat **83** est en matériau piézoélectrique ou non, le plus souvent en silicium. L'onde élastique est générée dans la lame **81** et se propage dans le substrat **83.** La fréquence de résonnance est imposée par l'épaisseur du substrat **83,** mais l'utilisation des harmoniques élevés permet d'atteindre des fréquences dans la gamme du GHz.

Un autre mode de réalisation d'un dispositif BAW à ondes élastiques de volume est représenté sur la figure 9. Le dispositif BAW comprend une lame mince ou film piézoélectrique **81** entourée de deux électrodes **82** respectivement placée sur les faces opposées de la lame **81.** Le dispositif est de type dit "film mince auto_suspendu" encore appelé FBAR (pour "Film Bulk Acoustic Resonator" en anglais) car il repose sur des reliefs **84** du substrat **83.**

La figure 10 montre un mode der réalisation particulier d'un dispositif BAW. Dans ce cas une lame piézoélectrique **81,** entourée de deux électrodes **82** respectivement placées sur les faces opposées de la lame **81,** repose sur un empilement de couches minces quart d'onde **85** formant un miroir de Bragg par l'alternance de fortes et de faibles impédances acoustiques. Ce dispositif est de type dit "résonateur sur miroir de Bragg" encore appelé SMR (pour "Solidely Mounted Resonator" en anglais).

## Revendications

1. Microsystème de mesure de la pression d'un gaz comportant :
- un dispositif à ondes élastiques (2 ; 80),
- un générateur d'onde radiofréquence (8), et
- un moyen de modification de la température du dispositif (11), **caractérisé en ce que** ledit générateur d'onde radiofréquence (8) génère une onde de fréquence supérieure à 200MHz, et **en ce que** ledit microsystème de mesure comporte en outre :
- un moyen de mesure de la température du gaz,
- un moyen de comparaison de la fréquence de fonctionnement du
dispositif avec une fréquence de référence,
- un moyen adapté à déterminer la température d'équilibre thermique du
dispositif à partir de la mesure de sa fréquence de fonctionnement, et
- un moyen adapté à calculer la pression du gaz à partir de la température d'équilibre du dispositif et de la température du gaz.

2. Microsystème selon la revendication 1, dans lequel le dispositif à ondes élastiques comprend :
- un émetteur d'onde élastique (3 ; 82),
- un récepteur d'onde élastique (4 ; 82), et
- un substrat piézoélectrique (7 ; 81, 83).

3. Microsystème selon la revendication 2, dans lequel le matériau piézoélectrique a un coefficient de température au moins égal à 70ppm/ deg. C.

4. Microsystème selon l'une des revendications 1 à 3, dans lequel le dispositif à ondes élastiques est suspendu par des fils à un support.

5. Microsystème selon l'une des revendications 1 à 4, dans lequel le dispositif à ondes élastiques est usiné dans une matrice à laquelle il reste relié par un pont de matière.

6. Microsystème selon l'une des revendications précédentes, dans lequel le dispositif à ondes élastiques est un dispositif à ondes élastiques de surface comprenant un substrat piézoélectrique portant l'émetteur et le récepteur d'onde élastique, dont la majorité de la surface est recouverte d'une couche de métal à faible coefficient d'émissivité.

7. Microsystème selon l'une des revendications précédentes, comportant plusieurs dispositifs à ondes élastiques en parallèle.

8. Microsystème selon l'une des revendications précédentes, comportant en outre au moins deux dispositifs à ondes élastiques orientés dans des directions différentes.

9. Microsystème selon l'une des revendications précédentes, comportant en outre au moins un dispositif à ondes élastiques de surface recouvert d'une couche de polymère.

10. Microsystème selon l'une des revendications précédentes, comprenant des moyens d'interrogation et de pilotage des dispositifs à ondes élastiques et un programme de contrôle du chauffage et de traitement des signaux émis par les dispositifs.

11. Procédé de mesure de la pression d'un gaz au moyen d'un microsystème comportant un dispositif à ondes élastiques, un générateur d'une onde radiofréquence, un moyen de modification de la température du dispositif, et un moyen de comparaison de la fréquence de fonctionnement du dispositif avec une fréquence de référence, **caractérisé en ce que** le procédé comprend les étapes suivantes:
- on place le dispositif dans le gaz,
- on porte le dispositif à une température différente de la température du gaz,
- on détermine la température d'équilibre thermique du dispositif à partir de la mesure de sa fréquence de fonctionnement,
- on mesure la température du gaz,
- on calcule la pression du gaz à partir de la température d'équilibre du dispositif et de la température du gaz.

## Patentansprüche

1. Mikrosystem zur Messung des Drucks eines Gases, welches Folgendes aufweist:
- eine Vorrichtung für elastische Wellen (2; 80);
- einen Radiofrequenzwellengenerator (8), und
- ein Mittel zur Änderung der Temperatur der Vorrichtung (11),
**dadurch gekennzeichnet, dass** der Radiofrequenzwellengenerator (8) eine Welle mit einer Frequenz von über 200 MHz erzeugt, und dadurch, dass das Mikrosystem zur Messung außerdem Folgendes aufweist:
- ein Mittel zur Messung der Temperatur des Gases,
- ein Mittel zum Vergleich der Betriebsfrequenz der Vorrichtung mit einer Referenzfrequenz,
- ein Mittel, das dafür eingerichtet ist, die thermische Gleichgewichtstemperatur der Vorrichtung ausgehend von der Messung ihrer Betriebsfrequenz zu bestimmen, und
- ein Mittel, das dafür eingerichtet ist, den Druck des Gases ausgehend von der Gleichgewichtstemperatur der Vorrichtung und der Temperatur des Gases zu berechnen.

2. Mikrosystem nach Anspruch 1, wobei die Vorrichtung für elastische Wellen Folgendes aufweist:
- einen Sender für elastische Wellen (3; 82);
- einen Empfänger für elastische Wellen (4; 82); und
- ein piezoelektrisches Substrat (7; 81, 83).

3. Mikrosystem nach Anspruch 2, wobei das piezoelektrische Material einen Temperaturkoeffizienten aufweist, der mindestens gleich 70 ppm/Grad C ist.

4. Mikrosystem nach einem der Ansprüche 1 bis 3, wobei die Vorrichtung für elastische Wellen mit Fäden an einem Träger aufgehängt ist.

5. Mikrosystem nach einem der Ansprüche 1 bis 4, wobei die Vorrichtung für elastische Wellen in einer Matrize bearbeitet wird, mit welcher sie durch eine Materialbrücke verbunden ist.

6. Mikrosystem nach einem der vorhergehenden Ansprüche, wobei die Vorrichtung für elastische Wellen eine Vorrichtung für elastische Oberflächenwellen ist, welche ein piezoelektrisches Substrat aufweist, das den Sender und den Empfänger für elastische Wellen trägt und von dem der größte Teil der Oberfläche mit einer Schicht aus Metall mit niedrigem Emissionskoeffizient bedeckt ist.

7. Mikrosystem nach einem der vorhergehenden Ansprüche, welche mehrere Vorrichtungen für elastische Wellen in parallel aufweist.

8. Mikrosystem nach einem der vorhergehenden Ansprüche, welches außerdem mindestens zwei Vorrichtungen für elastische Wellen aufweist, die in verschiedenen Richtungen ausgerichtet sind.

9. Mikrosystem nach einem der vorhergehenden Ansprüche, welches außerdem mindestens eine Vorrichtung für elastische Oberflächenwellen aufweist, die mit einer Polymerschicht bedeckt ist.

10. Mikrosystem nach einem der vorhergehenden Ansprüche, welches Mittel zur Abfrage und Vorsteuerung der Vorrichtungen für elastische Wellen und ein Programm zur Kontrolle der Erwärmung und Verarbeitung der von den Vorrichtungen gesendeten Signale aufweist.

11. Verfahren zur Messung des Drucks eines Gases mittels eines Mikrosystems, das eine Vorrichtung für elastische Wellen, einen Radiofrequenzwellengenerator, ein Mittel zur Änderung der Temperatur der Vorrichtung und ein Mittel zum Vergleich der Betriebsfrequenz der Vorrichtung mit einer Referenzfrequenz aufweist, **dadurch gekennzeichnet, dass** das Verfahren die folgenden Schritte aufweist:
- Anordnen der Vorrichtung in dem Gas,
- Bringen der Vorrichtung auf eine Temperatur, die von der Temperatur des Gases verschieden ist,
- Bestimmen der thermischen Gleichgewichtstemperatur der Vorrichtung ausgehend von der Messung ihrer Betriebsfrequenz,
- Messen der Temperatur des Gases,
- Berechnen des Drucks des Gases ausgehend von der Gleichgewichtstemperatur der Vorrichtung und der Temperatur des Gases.

## Claims

1. Microsystem for measuring the pressure of a gas comprising:
- an elastic wave device (2; 80),
- a radio frequency wave generator (8), and
- a means for modifying the temperature of the device (11),
**characterized in that** said radio frequency wave generator (8) generates a wave of frequency greater than 200 MHz, and **in that** said measuring microsystem also comprises:
- a means for measuring the temperature of the gas,
- a means for comparing the operating frequency of the device with a reference frequency,
- a means suitable for determining the thermal equilibrium temperature of the device based on the measurement of its operating frequency, and
- a means suitable for calculating the pressure of the gas based on the equilibrium temperature of the device and on the temperature of the gas.

2. Microsystem according to Claim 1, in which the elastic wave device comprises:
- an elastic wave emitter (3; 82),
- an elastic wave receiver (4; 82), and
- a piezoelectric substrate (7; 81, 83).

3. Microsystem according to Claim 2, in which the piezoelectric material has a temperature coefficient at least equal to 70 ppm/deg.C.

4. Microsystem according to one of Claims 1 to 3, in which the elastic wave device is suspended by wires from a support.

5. Microsystem according to one of Claims 1 to 4, in which the elastic wave device is machined in a die to which it remains linked by a bridge of material.

6. Microsystem according to one of the preceding claims, in which the elastic wave device is a surface elastic wave device comprising a piezoelectric substrate bearing the elastic wave emitter and receiver, most of the surface of which is covered by a layer of metal with low emissivity coefficient.

7. Microsystem according to one of the preceding claims, comprising a plurality of elastic wave devices in parallel.

8. Microsystem according to one of the preceding claims, also comprising at least two elastic wave devices oriented in different directions.

9. Microsystem according to one of the preceding claims, also comprising at least one surface elastic wave device covered with a layer of polymer.

10. Microsystem according to one of the preceding claims, comprising means for interrogating and driving the elastic wave devices and a programme for controlling the heating and for processing the signals emitted by the devices.

11. Method for measuring the pressure of a gas by means of a microsystem comprising an elastic wave device, a generator of a radio frequency wave, a means for modifying the temperature of the device, and a means for comparing the operating frequency of the device with a reference frequency, **characterized in that** the method comprises the following steps:
- the device is placed in the gas,
- the device is raised to a temperature different from the temperature of the gas,
- the thermal equilibrium temperature of the device is determined on the basis of the measurement of its operating frequency,
- the temperature of the gas is measured,
- the pressure of the gas is calculated on the basis of the equilibrium temperature of the device and of the temperature of the gas.
